# EUROPÄISCHE PATENTANMELDUNG

(11) **EP 1 482 188 A2**
(43) Veröffentlichungstag der Anmeldung: **01.12.2004**
(21) Anmeldenummer: 04450104.7
(22) Anmeldetag: 06.05.2004
(51) Int. Cl.: F16B 43/00, E04B 1/74, F16B 13/00

(54) **Befestigungsvorrichtung mit thermischer Trennung**

(30) Priorität: 27.05.2003 AT 8172003
(71) Anmelder: Stich, Friedrich, A-3550 Langenlois (AT); Linhart, Werner, 2230 Gänserndorf (AT)
(72) Erfinder: Stich, Friedrich, A-3550 Langenlois (AT); Linhart, Werner, 2230 Gänserndorf (AT)
(74) Vertreter: Patentanwälte Barger, Piso & Partner

(57) **Zusammenfassung**

Die Erfindung betrifft eine Vorrichtung zur Befestigung von Gegenständen wie Dachrinnen, Blitzableitern, Schildern u.dgl. mit üblichen Schrauben, Bolzen, Gewindestangen an Fassaden mit starker wärmedämmender Isolierung (17) außerhalb ihrer tragenden Bauteile (15), wobei die Befestigungsvorrichtung (1) im wesentlichen eine Länge aufweist, die der Stärke der Isolierung (17) entspricht, dass sie ein Mantelelement aufweist, das auf seinem dem tragenden Bauteil (15) zugewandten Ende zumindest ein Montageelement (2, 7) zur Montage am tragenden Bauteil (15) aufweist und an dem nach außen gerichteten Ende eine Aufnahme (14) für die üblichen gewinde- oder schraubenartigen Halteelemente der Dachrinnen, Blitzableiter u.dgl. aufweist.

Die Erfindung ist dadurch gekennzeichnet, dass das Mantelelement ein Stützelement (3) ist und dass die Aufnahme (14) vom Stützelement (3) durch einen Körper (8) aus thermisch isolierendem Material, beispielsweise aus Kunststoff, Kautschuk od.dgl. getrennt ist.

## Beschreibung

Die Erfindung betrifft eine Vorrichtung zur Befestigung von Gegenständen wie Dachrinnen, Blitzableitern, Schildern u.dgl. mit üblichen Schrauben, Bolzen, Gewindestangen an Fassaden mit starker wärmedämmender Isolierung außerhalb ihrer tragenden Bauteile, wobei die Befestigungsvorrichtung im wesentlichen eine Länge aufweist, die der Stärke der Isolierung entspricht, dass sie ein Mantelelement aufweist, das auf seinem dem tragenden Bauteil zugewandten Ende zumindest ein Montageelement zur Montage am tragenden Bauteil aufweist und an dem nach außen gerichteten Ende eine Aufnahme für die üblichen gewinde- oder schraubenartigen Halteelemente der Dachrinnen, Blitzableiter u.dgl. aufweist.

Ein sehr ähnliches Befestigungselement zur Montage von Fassadenplatten an Wänden mit vorgelagerter Isolierung ist aus der DE 29 19 675 A bekannt: Dabei ist ein mehrstufiger Dübelteil vorgesehen, der im Bereich der Isolierung einen teilweise geschlitzten zylindrischen Mantel bzw. Mantelelement ausbildet und im Bereich des Mauerwerkes bzw. Hohlmauerwerkes eine Spritzhaut aufweist, die nach dem Einstecken des Befestigungselementes mit Bindemittel aufgeweitet wird und so den Halt des Befestigungsmittels sichert. Der zylindrische Mantel ist notwendig, um das Einbringen des Bindemittels zu erlauben, erfüllt aber keine Stütz- oder Haltefunktion. Am Befestigungselement werden mittels Schrauben die so befestigten Fassadenplatten montiert. Dabei besteht einerseits die Gefahr des Überlasten des Mantelteiles im Isolationsbereich und andererseits die Gefahr des Abdrehens der sehr schlanken Schrauben.

Aus der DE 199 63 916 A ist eine Hülle für einen herkömmlichen Spreizdübel bekannt, durch deren Verwendung die Übertragung von Körperschall vom vom Dübel gehaltenen Teil auf das Mauerwerk vermieden werden soll. Für die Verwendung an Mauern mit starker Wärmedämmung wird durch die Hülle nichts gewonnen.

Aus der DE 38 01 691 A ist ein speziell schalltrennender Dübel bekannt, der mehrteilig aufgebaut ist, jedoch für die Verwendung an Mauern mit starker Wärmedämmung nicht geeignet ist.

Zur Herabsetzung der Energiekosten eines Hauses und zur Schonung der Umwelt werden in den letzten Jahren die Fassaden von Häusern sowohl bei der Neuerrichtung als auch durch nachträgliches Aufrüsten wesentlich besser als früher wärmegedämmt. In vielen Fällen werden sog. Wärmeverbundsysteme aus aufgeklebten Dämmplatten mit dünner Kunststoffputzschicht verwendet. Aufgrund der geringen mechanischen Stabilität des Verbundsystems können keine belasteten Gegenstände in die Fassade befestigt werden, sondern es müssen die Befestigungselemente bis auf den massiven Mauergrund geführt werden.

Es ist daher notwendig geworden, die Befestigungsteile von Dachablaufrohren, Blitzableitern u.dgl. immer länger und länger auszubilden, um durch die Isolierschicht bis zu den eigentlich tragenden Gebäudeteilen zu kommen und dort zu verankern. Nun hat im Zuge der Entwicklung die Isolierschicht Stärken erreicht, die bei den modernen Energiesparhäusern bereits bis zu 30 cm beträgt, wodurch die genannten Probleme mit den bisherigen, verlängerten Rohrschellen und Befestigungssystemen nahezu unlösbar werden.

Man darf dabei nicht außer Acht lassen, dass die massiven (je länger, um so biegesteifer und massiver!), zumeist aus Metall bestehenden und normal zur Ebene der Isolierschicht verlaufenden Halteelemente Wärmebrücken bzw. Schallbrücken darstellen, die dann lokal einen Teil der Isolationsbestrebungen wiederum zunichte machen, zu Kondensatbildung führen und außerdem den Schall (Ablaufgeräusche) in den massiven Untergrund leiten. Neben den wärme- und schalltechnischen Problemen kommt es durch die unweigerlichen Bewegungen der bisherigen Halterungen zu großen Öffnungen in der Außenhaut der Fassade, was zwangsläufig zum Wassereintritt in die Fassade führt. Dazu kommt, dass die bisherigen, verlängerten Halteelemente, die für starke Isolationsschichten ausgebildet sind, nicht zur Benutzung bei (außen) dünn isolierten Fassaden verwendbar sind und vice versa, was die Lagerhaltung und die Logistik aufbläht.

Die Erfindung hat das Ziel, eine Befestigungsvorrichtung zu schaffen, die diese Probleme löst und eine mechanisch, ebenso wie schalltechnisch und thermisch zufriedenstellende Verbindung schafft, die Verwendung "üblicher" Halteelemente ermöglicht und dabei doch ohne besonderen Mehraufwand auf der Baustelle zu verwenden ist.

Erfindungsgemäß werden diese Ziele dadurch erreicht, dass das Mantelelement ein Stützelement ist und dass die Aufnahme vom Stützelement durch einen Körper aus thermisch isolierendem Material, beispielsweise aus Kunststoff, Kautschuk od.dgl. getrennt ist.

Es wird eine primäre Befestigungsvorrichtung, die im wesentlichen eine Länge aufweist, die der Stärke der Isolierung entspricht, an der massiven Wand montiert. Sie besteht aus einem Tragelement bzw. Stützelement, das auf dem dem tragenden Bauteil zugewandten Ende zumindest ein Montageelement zur Montage an diesem aufweist, und dass am anderen, nach außen gerichteten Ende eine Aufnahme für die handelsüblichen gewinde- oder schraubenartigen Halteelemente der Dachrinnen, Blitzableiter u.dgl. vorgesehen ist.

Durch diese Aufnahme im Stützelement aus schalltechnisch und thermisch isolierendem Material, beispielsweise Kunststoff oder Kautschuk od.dgl. wird das eingeschraubte Halteelement entsprechend entkoppelt, durch das Tragelement wird die notwendige mechanische Festigkeit erreicht. Durch diese Maßnahmen gelingt es, im äußeren Bereich der isolierten Fassade eine Befestigungsstelle für herkömmliche Halteelemente zu schaffen, die mechanisch stabil ist und die bisher unvermeidbare Kältebrückenbildung und Schallbrückenbildung zumindest deutlich verringert.

In einer bevorzugten Ausgestaltung besteht das Montageelement aus einer Befestigungsplatte, die an den tragenden Bauteilen vor dem Aufbringen der Isolierung auf übliche Weise befestigt wird, das Tragelement besteht aus einem auf der Montageplatte angeschweißten oder auf andere Weise befestigten Rohr. Die isolierte Aufnahme besteht aus der Seele eines im Rohr angeordneten Kautschuk- oder Kunststoffzylinders. Die Befestigungsschrauben üblicher Dachrinnenschellen oder Blitzableiterhalterungen können einfach in diese Seele eingeschraubt werden, ohne dass es zu einem direkten metallischen Kontakt und damit zur Ausbildung von Kältebrücken kommt.

Die Erfindung wird im folgenden an Hand der Zeichnung näher erläutert. Dabei zeigt
die Fig. 1 eine Ausführungsform einer erfindungsgemäßen Befestigungsvorrichtung rein schematisch in Schrägansicht als Phantombild,
die Fig. 2 eine Variante, insbesondere für nachträgliche Montagen
die Fig. 3 einen mit beiden Ausführungsformen zu verwendenden Isolierkern und
die Fig. 4 die Situation im fertigen Zustand vor der Montage eines Gegenstandes.

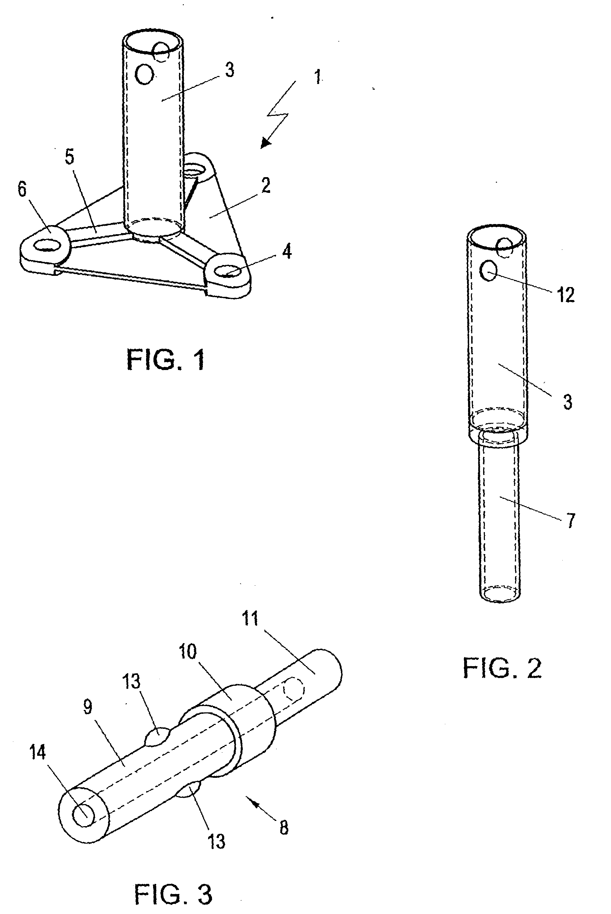

In Fig. 1 ist eine erfindungsgemäße Vorrichtung vor dem Einbringen des thermisch isolierenden Teils, der Aufnahme, dargestellt. Diese Vorrichtung besteht im wesentlichen aus einer Montageplatte 2 und einem fest damit verbundenen Mantelelement, welches als Stütze bzw. Stützelement wirkt, und in Form eines Stützrohres 3 ausgebildet ist. Die Achse des Stützrohres steht bei den üblichen Anwendungsfällen normal zur Ebene der Montageplatte 2, die Verbindung der beiden Teile, die zumeist aus Metall bestehen, erfolgt am besten durch Schweißen, um die notwendige mechanische Festigkeit zu erreichen. Die Montageplatte 2 weist zumindest drei Löcher 4 auf und besitzt Verstärkungsrippen 5, um mit geringer Materialstärke eine hohe mechanische Festigkeit zu erzielen. Um ein gutes Anliegen an der Fassade zu ermöglichen, sind um die einzelnen Befestigungspunkte 4 Bereiche 6 zur Mauerseite hin gekröpft oder leicht vorspringend ausgebildet, um eine statisch bestimmte Auflage zu erreichen. Die Montageplatte wird vorzugsweise in dreieckiger Form hergestellt, runde oder andere geometrischen Plattenformen sind aber ebenfalls möglich.

Die Fig. 2 zeigt eine Variante, die insbesondere, aber nicht ausschließlich, auch zur nachträglichen Montage geeignet ist, wie weiter unten erläutert wird. Hier ist das Stützrohr 3 fest mit einer Gewindestange 7 verbunden, bevorzugt verschweißt, und die Gewindestange 7 kann als Klebeanker in den tragenden Bauteilen montiert werden.

Die Befestigung der zu befestigenden Halteelemente erfolgt in beiden Fällen nach der endgültigen Fertigstellung der erfindungsgemäßen Befestigungsvorrichtung, d.h. nach dem Einbringen des Isolierkörpers 8, der in Fig. 3 dargestellt ist, in das Stützrohr 3. Dieser Körper bzw. Kern 8 weist im dargestellten Ausführungsbeispiel im wesentlichen drei axiale Abschnitte auf: einen zylindrischen oder leicht konischen Tragabschnitt 9, dessen Außendurchmesser und Länge ein festes Einbringen ins Innere des Stützrohres 3 ermöglicht; einen Montageabschnitt 10, der daran anschließt und dessen Durchmesser bevorzugt gleich ist dem Außendurchmesser des Stützrohres 3, mit dem er verwendet wird und einen Positionierabschnitt 11, bevorzugt mit geringerem Durchmesser, der auch nach dem Aufbringen der Isolierung und des Dünnputzes aus der Wand ragt und so das Auffinden der Befestigungsvorrichtung ermöglicht. Anstelle des Abschnittes 11 kann auch eine Verlängerung des Montageabschnittes 10 über die Fassadenflucht hinaus erfolgen, der dann nach Aufbringen der Dämmschichte auf die notwendige Länge abgeschnitten wird. Erfindungsgemäß können für diese Ausführung verschiedenfärbige Isolierkerne ausgeführt werden, die mit oder ohne Markierungen bzw. stufenförmige Verjüngungen zum Abschneiden versehen sein können.

Um zu einer mechanisch zuverlässigen Verbindung zwischen dem Körper 8 und dem Stützrohr 3 zu kommen, ist im dargestellten Ausführungsbeispiel folgendes vorgesehen: wie aus den Fig. 1 und 2 hervorgeht, weisen die Stützrohre 3 zwei diametral gegenüberliegende Ausnehmungen bzw. Löcher 12 auf und der Körper 8 weist im geometrisch korrespondierenden Bereich Vorsprünge 13 auf, die beim Einschieben des Körpers 8 in das Stützrohr 3 elastisch deformiert werden und, wenn der Körper 8 seine richtige Position im Stützrohr 3 einnimmt, durch die Löcher 12 radial nach außen treten und so den Körper im Rohr fixieren. Um das Einbringen zu erleichtern und das Ausziehen zu erschweren, können die Vorsprünge 13 keilförmig ausgebildet sein.

Es ist selbstverständlich möglich, jede andere Art der Verbesserung der Verbindung, die im Stand der Technik bekannt ist, verwenden, dazu zählen keilförmige Leisten und passende Ringnuten. Es ist möglich, die beiden Teile miteinander zu verkleben oder das Stützrohr als verlorene Form für den im Stützrohr selbst hergestellten Kern zu verwenden, wenn dies auch eine relativ aufwendige Herstellung ist.

Ungeachtet dieser unterschiedlichen Ausbildungsformen weist der Körper 8 zumindest über die Länge der Abschnitte 9 und 10, bevorzugt auch noch zumindest ein Stück in den Positionierabschnitt 11 (sofern vorhanden) hinein, einen zylindrischen Hohlraum, eine sogenannte Seele 14 auf. Die zylindrische Innenwand des Körpers 8 um die Seele 14 stellt den eigentlichen Befestigungsbereich für die Schrauben, Gewinde, Anker, Bolzen od.dgl. der jeweiligen Montageelemente (z.B. Ablaufrohrschellen) dar. Um ein Verschmutzen der Seele 14 durch den Putzmörtel zu verhindern, kann die obere Öffnung der Seele mit einer aufgesteckten Schutzkappe oder mit einer dünnen, durchstoßbaren Schicht des Kernmaterials geschlossen sein.

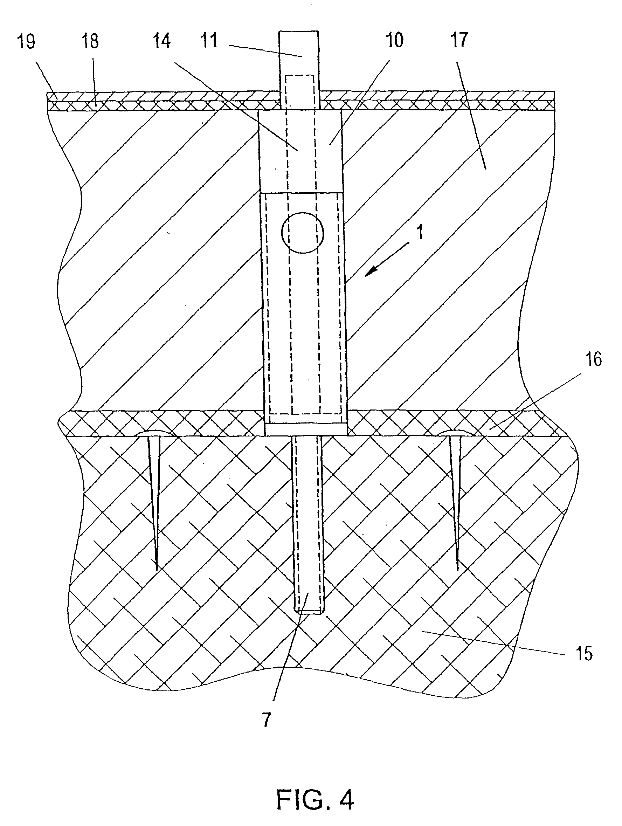

Die Situation der erfindungsgemäßen Vorrichtung 1 in der Variante der Fig. 2 im zusammengebauten und im isolierten Fassadenbereich montierten Zustand ist in Fig. 4 dargestellt. An einem tragenden Mauerteil 15 ist, ein Verankerungsbolzen 7 als Klebeanker befestigt. Am tragenden Mauerwerk ist mit entsprechendem Klebemörtel 16 der Dämmstoff (Expandiertes Polystyrol, Mineralfaser, Kork usw.) 17 fixiert, der wie eingangs erwähnt, bis zu 30 cm stark sein kann. An der Außenseite der Dämmstoffschicht 17 ist eine gewebearmierte Spachtelung 18 vorgesehen, auf der eine dünne Putzschicht 19 aufgebracht ist.

Die gedämmte Fassade kann selbstverständlich auch anders als hier dargestellt aufgebaut sein, insbesondere eignet sich die erfindungsgemäße Montagevorrichtung auch für den Einbau in vorgehängte, hinterlüftete Fassaden aus Plattenwerkstoffen, Metall etc., mit ähnlich dicken Dämmschichten. Gemeinsam ist bei all diesen Fassadensystemen, dass zwischen der Fassadenaußenhaut und dem tragendem Bauelement eine relativ dicke und weiche Dämmschicht (bei hinterlüfteten Systemen auch eine Luftschicht) eingebaut ist. Weder die Fassadenaußenhaut 18, 19 noch die Dämmschicht 17 eignen sich für tragende, mechanische Befestigungen.

Wie aus Fig. 4 hervorgeht, reicht nun durch das Stützrohr 3 ein isolierendes, aber mechanisch festes Element, nämlich der Tragabschnitt 9 und der Montageabschnitt 10 des Körpers 8 bis nahe unter die Putzschicht 19. Der Positionierabschnitt 11 des Körpers 8 ragt durch die Putzschicht und ermöglicht ein leichtes Auffinden des Befestigungspunktes.

In einer bevorzugten Ausführungsform ist im Bereich des Überganges zwischen den Abschnitten 10 und 11 eine Sollbruch- bzw. Sollrissstelle vorgesehen, um ein leichtes Entfernen des Überstandes zu ermöglichen. Es ist in diesem Fall die Seele 14 bis in den Bereich der Sollrissstelle zu führen, um nach dem Entfernen des Positionierabschnittes 11 die Seele 14 zum Einschrauben bzw. Einbringen des Befestigungsmittels zu montierenden Gegenstandes zur Verfügung zu haben.

Eine Ausführung mit einem über die Putzoberfläche ragenden Teil 10, der je nach tatsächlicher Dicke des Dämmstoffes gekürzt werden kann, steht auch hier alternativ zur Verfügung (Beschreibung s. auch weiter oben).

Die Erfindung ist nicht auf die dargestellten und beschriebenen Ausführungsformen beschränkt, sondern kann verschiedentlich abgewandelt werden. So ist es, bei entsprechender Wahl der Durchmesserverhältnisse, möglich, dass für besonders hohe Anforderungen an den Wärmedurchgangswiderstand des Elements das Stützrohr 3 selbst nochmals thermisch unterbrochen wird. Das mit dem Montageelement verbundene Stützrohr 3 wird relativ kurz ausgeführt und am Körper 8 statt des radial stärkeren Stützbereiches 10 ein radial dünnerer Stützbereich vorgesehen, wobei allerdings ein schmaler schulterförmiger oder flanschförmiger Ringsteg vorzusehen ist, der einerseits die Positionierung des Stützrohres 3 vorgibt und andererseits die Positionierung eines Hilfsrohres, das von der anderen Seite des Körpers 8 auf diesen aufgeschoben wird. Da nun die beiden Stützrohre keinen Kontakt zueinander haben, ist eine weitere Unterbrechung der durch das Stützrohr gebildeten Wärmebrücke geschaffen, ohne dabei die mechanische Festigkeit merklich herabzusetzen, da im axial kurzen Bereich des Flansches zwischen den beiden Stützrohren eine Deformation nicht in merklichem Ausmaß erfolgen kann. Selbstverständlich ist es weiterhin möglich, das Stützrohr 3 oder auch das zusätzliche Stützrohr nicht als Rohr, sondern als Gitter auszubilden und so die Wärmeleitung weiter herabzusetzen.

Als Material für das Stützelement 3 und das Montageelement kommen in erster Linie metallische Werkstoffe in Frage, wegen der Gefahr der kondensierenden Nässe und der schweren Zugänglichkeit hinter der Fassade ist die Verwendung von korrosionsresistentem, austenitischen Stahl bevorzugt. Dieses Material hat darüber hinaus den Vorteil, ein relativ schlechter Wärmeleiter bei hoher mechanischer Festigkeit zu sein. Es ist in Sonderfällen selbstverständlich möglich, diese beiden Teile aus hochwertigem Kunststoff herzustellen, was auch das Problem der Bildung von Wärmebrücken vollständig beseitigt und darüber hinaus eine einstückige Herstellung erlaubt, doch sind die notwendigen mechanischen Festigkeitswerte, insbesondere bei extrem dicken Isolierungen, nur schlecht zu erreichen. Man muss dabei bedenken, dass die erfindungsgemäße Vorrichtung starken thermischen Beanspruchungen ausgesetzt ist und mit ihrem wandseitigen Ende praktisch immer Raumtemperatur, mit ihrem putzseitigen Ende immer Umgebungstemperatur somit zwischen - 25°C und + 50°C zu ertragen hat. Dazu kommt noch, besonders am äußeren Stirnende, die Gefahr, dem ultraviolettem Sonnenlicht ausgesetzt zu sein, was auch für viele hochwertige Kunststoffe äußerst problematisch ist, es sei hier nochmals auf die notwendige lange Lebensdauer der erfindungsgemäßen Vorrichtung im Betrieb hingewiesen.

Es können an den erfindungsgemäßen Vorrichtungen auch alle Arten von Änderungen und Varianten vorgesehen sein, die die Montage erleichtern, so ist es zum Einbringen, insbesondere gummielastischer Körper 8 in die Stützelemente 3 zweckmäßig, auf der Seite der Montagevorrichtung der Stützelemente 3 eine Entlüftungsöffnung vorzusehen, um beim Einschieben des Körpers 8 nicht gegen einen Luftpolster ankämpfen zu müssen. Dies erübrigt sich, wenn die Seele 14 des Körpers 8 als Durchgangsloch und nicht als Sackloch ausgebildet ist. Wenn, wie im dargestellten Ausführungsbeispiel mechanische Rückhaltemittel 12, 13 zwischen dem Körper 8 und dem Stützelement 3 vorgesehen sind, die nicht kreissymmetrisch ausgebildet sind, so können farbliche oder ausgeformte optisch oder mechanisch wirkende Justierhilfen vorgesehen sein, um von Anfang an den Kern 8 in der richtigen Winkellage in das Stützelement 3 einzubringen.

Die Erfindung ist auch nicht auf im wesentlichen stiftartige oder rohrartige Vorrichtungen beschränkt, sondern kann zur Ableitung erhöhter Lasten linearen oder flächigen Charakter aufweisen und dann zumindest zwei Befestigungspunkte besitzen. Da die Erstreckung normal zur Mittelebene der Fläche nur gering sein muss und zumindest die Fläche der Vorrichtung bei dieser Ausführungsform aus thermischen und Gewichtsgründen, bevorzugt aus Kunststoff besteht, kann das Dämmmaterial dicht an die Fläche herangebracht werden, so dass der Aufbau der Dämmfassade nicht beeinträchtigt wird. Es müssen im Zuge der Befestigung eines Dachablaufrohres od.dgl. auch nicht alle Befestigungselemente flächig sein, es genügt, wenn diese Elemente an den Hauptlastpunkten (Fixpunkten) vorgesehen sind, beispielsweise an den Stellen, an denen das Gewicht der Dachrinne, wenn sie verstopft oder zugefroren ist, in das tragende Mauerwerk abzuleiten ist.

## Patentansprüche

1. Vorrichtung zur Befestigung von Gegenständen wie Dachrinnen, Blitzableitern, Schildern u.dgl. mit üblichen Schrauben, Bolzen, Gewindestangen an Fassaden mit starker wärmedämmender Isolierung (17) außerhalb ihrer tragenden Bauteile (15), wobei die Befestigungsvorrichtung (1) im wesentlichen eine Länge aufweist, die der Stärke der Isolierung (17) entspricht, dass sie ein Mantelelement aufweist, das auf seinem dem tragenden Bauteil (15) zugewandten Ende zumindest ein Montageelement (2, 7) zur Montage am tragenden Bauteil (15) aufweist und an dem nach außen gerichteten Ende eine Aufnahme (14) für die üblichen gewinde- oder schraubenartigen Halteelemente der Dachrinnen, Blitzableiter u.dgl. aufweist, **dadurch gekennzeichnet, dass** das Mantelelement ein Stützelement (3) ist und dass die Aufnahme (14) vom Stützelement (3) durch einen Körper (8) aus thermisch isolierendem Material, beispielsweise aus Kunststoff, Kautschuk od.dgl. getrennt ist.

2. Vorrichtung nach Anspruch 1, **dadurch gekennzeichnet, dass** das Stützelement ein Stützrohr (3) ist.

3. Vorrichtung nach Anspruch 1 oder 2, **dadurch gekennzeichnet, dass** das Montageelement eine Montageplatte (2) mit zumindest zwei, bevorzugt drei Befestigungslöchern (4) ist (Fig. 1).

4. Vorrichtung nach Anspruch 3, **dadurch gekennzeichnet, dass** die Montageplatte (2) im Bereich (6) der Befestigungslöcher (4) vorspringend ausgebildet ist.

5. Vorrichtung nach Anspruch 3 oder 4, **dadurch gekennzeichnet, dass** die Montageplatte (2) mit Verstärkungsrippen (5) zu jedem vorspringenden Bereich (6) versehen ist (Fig. 2).

6. Vorrichtung nach Anspruch 1 oder 2, **dadurch gekennzeichnet, dass** das Montageelement ein Verankerungsbolzen (7) oder eine Gewindestange ist.

7. Vorrichtung nach Anspruch 6, **dadurch gekennzeichnet, dass** der Verankerungsbolzen (7) oder die Gewindestange zumindest im wesentlichen koaxial mit dem Stützelement (3) verläuft.

8. Vorrichtung nach einem der voranstehenden Ansprüche, **dadurch gekennzeichnet, dass** der Körper (8) im wesentlichen zylindrisch mit einem hohlen Abschnitt, einer die Aufnahme bildenden Seele (14), ausgebildet ist.

9. Vorrichtung nach Anspruch 8, **dadurch gekennzeichnet, dass** der Körper (8) einen im Stützelement (3) liegenden Rohrabschnitt (9), einen aus dem Stützelement (3) ragenden Montageabschnitt (10) und einen Positionierabschnitt (11) aufweist, und dass der Positionierabschnitt (11) zumindest an seinem freien Ende vollzylindrisch ausgebildet ist.

10. Vorrichtung nach Anspruch 9, **dadurch gekennzeichnet, dass** der Positionierabschnitt (11) einen kleineren Durchmesser aufweist als der Rohrabschnitt (9).

11. Vorrichtung nach einem der Ansprüche 9 bis 10, **dadurch gekennzeichnet, dass** der Körper (8) einen im montierten Zustand über den äußeren Putz ragenden Positionierabschnitt (11) aufweist.

12. Vorrichtung nach einem der Ansprüche 9 bis 11, **dadurch gekennzeichnet, dass** der Rohrabschnitt (9) und das Innere des Stützelements (3) schwach konisch ausgebildet sind.

13. Vorrichtung nach einem der Ansprüche 9 bis 12, **dadurch gekennzeichnet; dass** der Rohrabschnitt (9) Vorsprünge (13) und das Stützelement (3) korrespondierende Ausnehmungen (12) aufweist.

14. Vorrichtung nach einem der Ansprüche 1 bis 13, **dadurch gekennzeichnet, dass** der Körper (8) in das Stützelement (3) eingeschoben ist und form- und/oder kraftschlüssig fixiert ist.

15. Vorrichtung nach einem der Ansprüche 1 bis 14, **dadurch gekennzeichnet, dass** der Körper (8) in das Stützelement (3) eingeklebt ist.

16. Vorrichtung nach einem der Ansprüche 1 bis 15, **dadurch gekennzeichnet, dass** der Körper (8) aus Kautschuk oder Kunststoff besteht.

17. Vorrichtung nach einem der Ansprüche 1 bis 16, **dadurch gekennzeichnet, dass** der Körper (8) aus Kautschuk besteht und in das Stützelement (3) einvulkanisiert ist.

18. Vorrichtung nach einem der Ansprüche 1 bis 17, **dadurch gekennzeichnet, dass** der Körper (8) über das Stützelement (3) hinausragt.
